(19) Europäisches Patentamt
European Patent Office
Office européen des brevets

(11) **EP 4 386 446 A1**

(12) **EUROPEAN PATENT APPLICATION**

(43) Date of publication:
**19.06.2024 Bulletin 2024/25**

(21) Application number: **22212845.6**

(22) Date of filing: **12.12.2022**

(51) International Patent Classification (IPC):
**G01S 13/87** (2006.01)        **G01S 13/74** (2006.01)

(52) Cooperative Patent Classification (CPC):
**G01S 13/0209; G01S 13/74; G01S 13/878;**
G01S 2013/466

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventor: **Tertinek, Stefan**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

(54) **METHOD OF OPERATING A UWB RADAR DEVICE**

(57)     Method of operating a UWB radar device (100a... 100n), comprising the steps:
- determining localization information of at least one UWB target device (200a...200n) relative to the UWB radar device (100a... 100n) and, based on the determined localization information;

- switching the UWB radar device (100a... 100n) into a radar mode, wherein an alignment of a beam of the UWB radar device (100a... 100n) in the radar mode to the at least one UWB target device (200a...200n) is done by using the localization information.

Fig. 2

EP 4 386 446 A1

**Description**

TECHNICAL FIELD

The present disclosure relates to a method of operating a UWB radar device. Furthermore, the present disclosure relates to a UWB radar device. Furthermore, the present disclosure relates to a computer-implemented method for carrying out the proposed method.

BACKGROUND

US 2022/0116088 A1 discloses an alignment of a transmit antenna beam in a millimeter-wave band using ultra wide band (UWB) signals.
US 2016/0118716 A1 discloses a system and method for communications, and, in particular, to a system and method for beam alignment.
US 11,265,072 B2 discloses a wireless communication system, an apparatus and a method for beam alignment based on location information in a wireless communication system.

SUMMARY

According to a first aspect of the present disclosure there is provided a method of operating a UWB radar device, comprising the steps:

- determining localization information of at least one UWB target device relative to the UWB radar device and, based on the determined localization information;
- switching the UWB radar device into a radar mode, wherein an alignment of a beam of the UWB radar device in the radar mode to the at least one UWB target device is done by using the localization information.

According to a further aspect there is provided a UWB radar device, comprising:

- an antenna array;
- a localization element being functionally connected to the antenna array for obtaining localization information of at least one UWB target device; and an initialization element functionally connected to the localization element for switching the UWB radar device into a radar mode by using determined localization information.

According to a further aspect there is provided a computer-implemented method comprising executable instructions which, when executed by a UWB radar device, cause said UWB radar device to carry out the proposed method.
According to an embodiment, an angle and a distance between the UWB radar device and the at least one UWB target device is obtained in a ranging mode of the UWB radar device. Said modi are implemented on a UWB chip, such that the UWB radar device can easily be driven in both modi.
According to a further embodiment, several UWB radar devices are performing ranging with the at least one UWB target device. In this way a multi anchor mode is performed with a determination of several distances.
According to a further embodiment, the UWB radar device directs its radar beam to a defined UWB target device in the radar mode after having determined its localization information. In this way a tracking of a specified target can be done.
According to a further embodiment, the several UWB radar devices carry out the ranging mode and the radar mode sequentially. In this way, the duration of frames and the number of frames used for ranging can be optimized and thus the ranging can be done very precisely.
According to a further embodiment, the several UWB radar devices carry out the ranging mode and the radar mode in parallel.
According to a further embodiment, the localization information is determined by measuring angle-of-arrivals. UWB chips support this mode of operation, thus enabling an alternative way of determining angles.
According to a further embodiment, a double sided two way ranging mode, DSTWR, is performed. In this way three frames are exchanged and six time stamps are combined. In this way, a determination of distances can be done even more accurately.
According to a further embodiment, an out-of-band communication mode is carried out in order to determine if a UWB target device intends to build up a connection to the UWB radar device, wherein configuration data are exchanged in the out-of-band communication mode between the UWB radar device and the at least one UWB target device. In general, the radar mode is performed in-band (e.g. with UWB on Channel 5 at 6.5 GHz) whereas communication may be performed out-of-band (e.g. with Bluetooth at 2.4 GHz).
According to a further embodiment, a time stamp is generated in the out-of-band communication mode, on which the ranging mode of the UWB radar device is based. In this way, an alternative way of building up connections between the UWB devices is provided.

BRIEF DESCRIPTION OF DRAWINGS

The aspects defined above and further aspects of the present disclosure are apparent from the examples of embodiment to be described hereinafter with reference to the appended drawings, which are explained with reference to the examples of embodiment. However, the disclosure is not limited to the examples of embodiment.
All illustrations in the drawings are schematical. It is noted that in different figures, similar or identical el-

elements or features are provided with the same reference signs or with reference signs that are different from the corresponding reference signs only within the first digit. In order to avoid unnecessary repetitions elements or features which have already been elucidated with respect to a previously described embodiment are not elucidated again at a later position of the description.

Fig. 1 shows a principle scenario with a beam alignment for UWB radar;

Fig. 2 shows a proposed UWB radar device in a ranging mode;

Fig. 3 shows a proposed UWB radar device in a radar mode;

Fig. 4 shows in principle a determination of angles at UWB nodes based on distances;

Fig. 5 shows a first use case of the proposed UWB radar device;

Fig. 6 shows a second use case of the proposed UWB radar device;

Fig. 7 shows a flow diagram of the proposed method; and

Fig. 8 shows a block diagram of a proposed UWB radar device.

DESCRIPTION OF EMBODIMENTS

Precise localization and tracking of moving objects such as a person is of interest for a variety of applications including e.g. Internet-of Things, smart home, elderly monitoring, entertainment, vehicle access, etc. Ultra-wideband devices are becoming more and more a choice for these applications as they support both a so called "ranging mode" (with distance measurements) for precise localization as well as a so called "radar mode" for accurate tracking the distance, angle and velocity of a moving object.

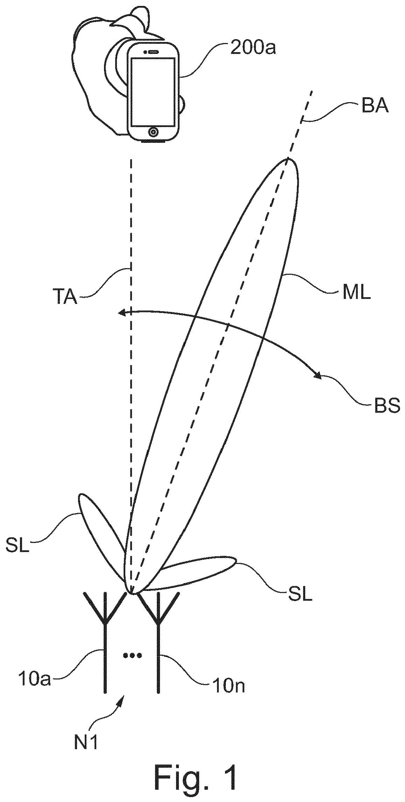

A typical example of tracking a user carrying a UWB target device 200a (e.g. smartphone) is shown in Fig. 1. A node N1 with one or several electronic UWB chips (not shown) supporting radar and ranging modi is connected to an antenna array comprising several antennas 10a...10n and is able to do beamforming. The beamforming can be done either through multiple transmitters on a single UWB chip or through single transmitters on multiple UWB chips. The node N1 is configured in a radar mode and transmits a RF beam along a beam axis BA, thereby receiving reflections from the environment and determining the presence of a target (e.g. a user to be tracked) within the RF beam. To improve the tracking precision and reject radio interference or reflections from the environment at multiple angles, the RF beam typically has a narrow main lobe ML and reduced sidelobes SL. As can be seen, the RF beam can be pivoted along the beam axis BA as a consequence of beam steering BS. Before tracking begins, the node N1 steers its RF beam over a search area until it finds the target device 200a, in which case the beam axis BA aligns with the target axis TA. This can e.g. be done electronically by controlling phase relationships between the antennas 10a...10n of the antenna array.

A problem can arise in that due to the narrow beam width of the RF beam, the scanning of the search area and the detection of the target can require a lot of time, particularly because multiple scans are typically needed to improve the detection performance. Moreover, when multiple UWB nodes in a distributed radar system track a target, each beam needs to scan the target area, increasing the overall time until a target has been detected. This increased time can impact a user experience and worsen an overall electric power consumption.

The present disclosure proposes a method to align the radar beam axis BA with the target axis TA based on determined localization information without requiring to scan the search area. This can be done in the following way:
Each of UWB nodes N1...Nn with UWB devices 100a...100n comprises an antenna array with antennas 10a...10n and is operable in a ranging and in a radar mode. A determination of a beam angle is done in UWB ranging mode by the following steps:

- Performing ranging between a user's UWB device (UWB target device 200a ... 200n) and the UWB nodes (UWB radar devices 100a...100n)
- Determining the distance (range) between the target device and each node
- Determining the angle between the device and each node based on the distances

Then, by using the angles determined in the ranging mode, a beam angle initialization for the radar mode can be done.

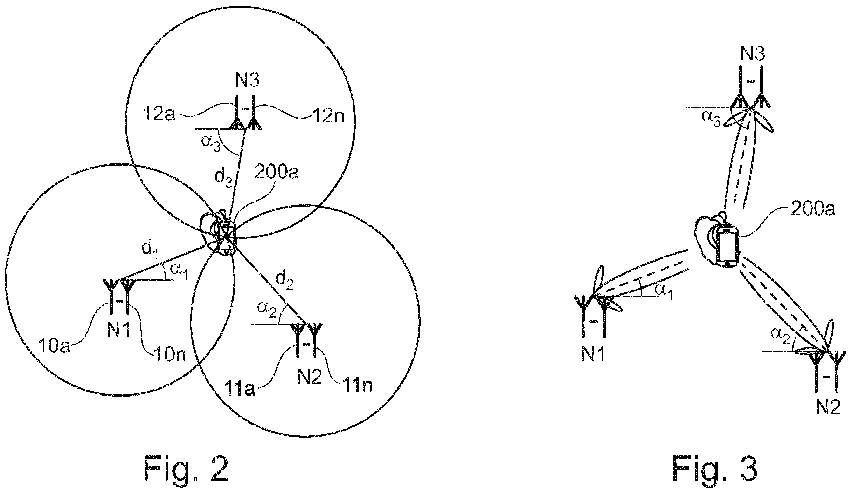

Referring to Fig. 2 now, an action mode of the proposed method is shown. One recognizes three UWB nodes N1, N2, N3, each of them having a UWB radar device 100a...100n (not shown) being located at known coordinates (e.g. cartesian coordinates) and a user (not shown) carrying a UWB capable target device 200a (e.g. a smartphone) at an unknown location. Each node N1, N2, N3 comprises an antenna array 10a...10n, 11a...11n, 12a... 12n and one or several UWB chips, that are able to operate in a ranging mode and in a radar mode and are connected to the antenna array 10a...10n, 11a...11n, 12a...12n for beamforming in the radar mode of the node N1, N2, N3.

The proposed method works as follows. Although Fig. 2 shows three UWB nodes N1, N2, N3 it is assumed that there are n nodes N1...Nn. In a first step, a determination of beam angles of each UWB node N1...Nn is carried out in a UWB ranging mode. Then, the UWB nodes N1...Nn are configured in a ranging mode. In this way a ranging between the nodes N1...Nn and the user UWB target device 200a can be done, wherein the ranging can be performed with several nodes, at least three nodes as a multi-anchor ranging as specified in FiRa (Fine Ranging). In this context, distances (ranges) $d_i$, i = 1, 2, 3....n from the nodes N1...Nn to the UWB target device 200a are determined, wherein the distances $d_i$, i = 1, 2, 3....n lie on target axes TA which are relevant for the radar mode. Based on the determined distances $d_i$, i = 1, 2, 3....n, there is performed a determination of angles $\alpha_i$, i = 1, 2, 3, ...n relative to the antenna array 10a...10n. Alternatively, the angles $\alpha_i$ can be determined directly from the ranging operation by measuring the angle-of-arrivals, as explained below in more detail. The measuring of the angle-of-arrivals can be implemented as a functional feature of UWB chips of the UWB nodes N1...Nn. In this alternative, only distance measurements are done between the UWB nodes N1...Nn and the UWB target devices 200a ... 200n. Alternatively, only distances di...$d_n$ are determined, wherein a calculation of localization information based on the determined distances is performed on-chip or off-chip.

In a second step there is performed a beam angle initialization for an execution of the UWB radar mode as indicated in Fig. 3. To this end, there is carried out a configuration of the UWB nodes N1...Nn in a radar mode and a radar beamforming is done for tracking a user with a UWB target device 200a ... 200n. An initialization of the beam angles is based on the angles $\alpha_i$, i = 1, 2, 3, ...n determined in the first step as explained above. In this way, an alignment of the beam axes with the target axes TA can be done. Resulting therefrom, a tracking of a user with the UWB target device 200a ... 200n can be carried out based on the initialized beam angles.

A computation of the angles $\alpha_i$ can be performed in the following way. As mentioned in the first step above, there exist the following two basic methods to determine the angles.

## Angle-of-arrival (AoA) based determination

Because the nodes N1...Nn already comprise an antenna array, the angles may be determined directly from the AoA in the ranging mode. For example, if two half-wavelength spaced antennas are used, the AoA can be determined from two channel-impulse responses obtained at the UWB nodes N1...Nn.

## Distance based determination

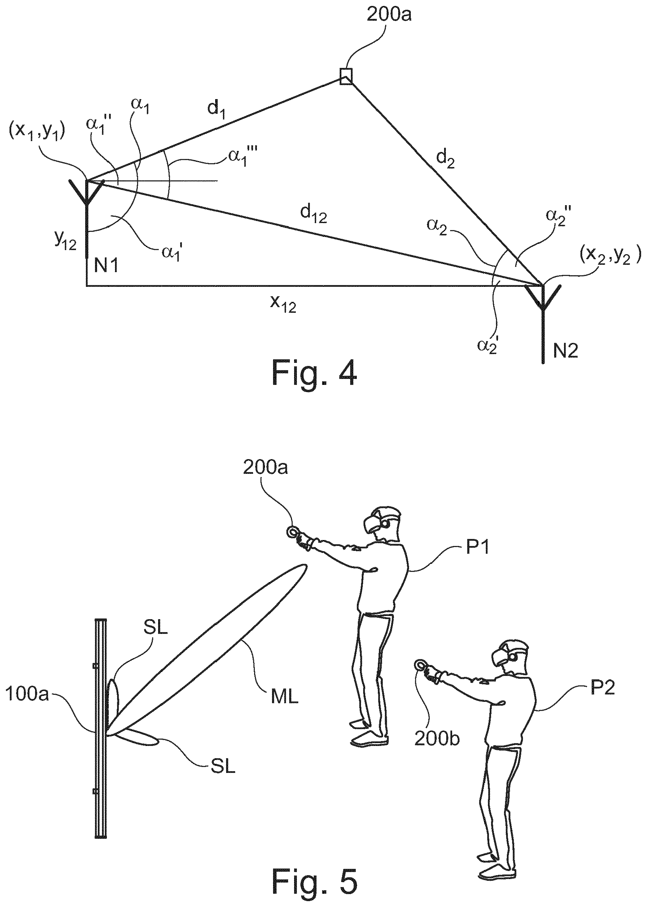

Another method is illustrated in more detail in Fig. 4 for two UWB nodes N1, N2 and is based directly on the distances $d_i$. This method can be used when the UWB nodes N1, N2 do not support AoA-determination in the ranging mode.

Using basic geometric principles as shown in Fig. 4 including the cosine law the angles $\alpha_1$, $\alpha_2$ can be determined as follows:

- Computation of a distance $d_{12}$ between node N1 and node N2 (right triangle)
  
  ○

$$d_{12} = \sqrt{x_{12}^2 + y_{12}^2}$$

where $x_{12} = x_1 - x_2$ and $y_{12} = y_1 - y_2$, and $x_1, y_1, x_2, y_2$ are the known node coordinates

- Determination of the angle $\alpha_1$:

  - Compute $\alpha'_1$

$$\alpha'_1 = \operatorname{atan}\left(\frac{x_{12}}{y_{12}}\right)$$

  - Compute $\alpha''_1$

$$\alpha''_1 = 90° - \alpha'_1$$

  - Compute $\alpha'''1$ (cosine law)

$$\alpha'''_1 = \operatorname{acos}\left(\frac{d_1^2 + d_{12}^2 - d_2^2}{2\,d_1\,d_{12}}\right)$$

  - Compute $\alpha_1$

$$\alpha_1 = \alpha'''_1 - \alpha''_1$$

- Determination of the angle $\alpha_2$

- Compute $\alpha'_2$

$$\alpha'_2 = \operatorname{atan}\left(\frac{y_{12}}{x_{12}}\right)$$

- Compute $\alpha''_2$ (cosine law)

$$\alpha''_2 = \operatorname{acos}\left(\frac{d_2^2 + d_{12}^2 - d_1^2}{2\,d_2\,d_{12}}\right)$$

- Compute $\alpha_2$

$$\alpha_2 = \alpha'_2 + \alpha''_2$$

The above explained two steps concerning the determination of the beam angles $\alpha_1$, $\alpha_2$ based on the angle-of-arrival and based on the distance may be combined to get a more accurate result for the angles and thus for the final beam alignment.

The angles of all other nodes can be determined in a similar manner.

In an alternative, a wireless out-of-band communication mode (e.g. Bluetooth) is done in order to determine if a UWB target device 200a...200n intends to build up a connection to the UWB radar device 100a... 100n. In this way, configuration data are exchanged in the out-of-band communication mode between the UWB radar device 100a... 100n and the at least one target device 200a ... 200n. This can be used to generate a "rough connection" between the UWB devices, which are then driven by using the exchanged configuration data.

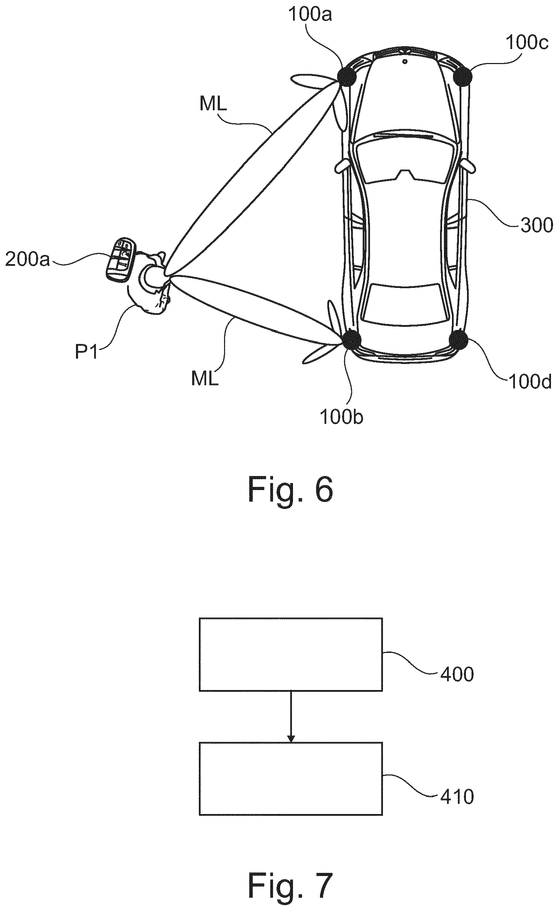

In the following, with respect to Figures 5, 6 two exemplary use cases of the present disclosure are explained in more detail.

Use case 1

A first use case concerns a virtual reality (VR) gaming shown in Fig. 5. Two human players P1, P2 have a headset mounted on their head and hold a controller with a UWB target device 200a, 200b in their hand to interact with the game, which runs e.g. on a PC having a proposed UWB radar device 100a. A monitor is used to setup the game by the player P1, P2. Both the monitor and the controller have integrated UWB devices which allow them to communicate. For example, the controller may send 3D-orientation or acceleration information (e.g. from an integrated sensor) to the monitor via a UWB link.

In addition, the monitor may operate the UWB device 100a in a radar mode, with the goal of sensing spatial movement of the players P1, P2 with their UWB target devices 200a, 200b and feed this movement information back into the VR game. To improve the detection performance of the movement the UWB target devices 200a, 200b may be connected to an antenna array in order to generate a radar beam (TX and/or RX). The radar beam with a main lobe ML can be pointed directly at one of the players P1, P2, without having to first scan the room, as outlined above. In particular, the UWB device 100a on the monitor and the controller with the UWB target device 200a, 200b may first perform double-sided two-way ranging (DSTWR), and the monitor may then determine the AoA, i.e. the angle of the player relative to the monitor. This angle is finally used to initialize the direction of the UWB radar beam pointing towards the respective player P1, P2.

Use case 2

A second use case is smart car access as shown in Fig. 6, wherein a person P1 carries a UWB enabled smartfob with a UWB target device 200a and is accessing a vehicle 300. For security reasons the vehicle 300 unlocks the doors only when the person P1 is within a certain distance (e.g. a 2 m perimeter around the vehicle 300). To determine the location, the vehicle 300 performs multi-lateration using ranges between the smartfob and the UWB devices 100a... 100d (UWB anchors) mounted on the vehicle 300. The ranges are obtained from DSTWR measurements in a UWB ranging mode. In addition, the vehicle 300 may determine movement information of the person P 1, or actually track the person P1 as it approaches the vehicle 300, by operating the UWB anchors in a radar mode and employing beamforming for improved tracking performance and interference rejection. To direct the beam at the person P1 without having to search for it, the previously determined location information may be used to compute the angles of the person P1 relative to the anchors 100a...100d as outlined hereinbefore. Similarly, the angle obtained from AoA information at the anchors 100a...100d may be used.

The proposed method as explained in the present disclosure:

- does not consider mm wave (hence no second antenna array is needed),
- reuses the same hardware and array for angle determination and actual beamforming by switching between a ranging mode and a radar mode,
- does not direct two beams between two antenna arrays, but rather between an antenna array and a detected target,
- can determine the AoA based on the distances between target and multiple UWB nodes.

Fig. 7 shows a flow of the proposed method.

In a step 400 a determining of localization information of at least one UWB target device 200a ... 200n relative to the UWB radar device 100a... 100n is done.

In a step 410, based on the determined localization information, a switching the UWB radar device 100a... 100n into a radar mode is done, wherein an alignment of a beam of the UWB radar device 100a...100n in the radar mode to the at least one UWB target device 200a ... 200n is done by using the localization information.

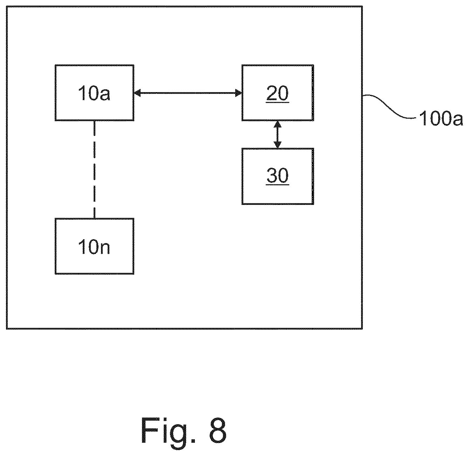

Fig. 8 shows a block diagram of a proposed UWB radar device 100a. One recognizes an antenna array with antennas 10a...10n being functionally connected to a localization element 20 for obtaining localization information of a UWB target device (not shown). The localization element 20 is functionally connected to an initialization element 30 for switching the UWB radar device 100a to a radar mode. Based on the determined localization information, the initialization element 30 initiates an alignment of a beam of the UWB radar device 100a to the at least one UWB target device.

Alternative embodiments of the UWB radar device 100a...100n provide a determination of localization information, distances and angles on-chip or off-chip (e.g. in the cloud).

The proposed method and UWB radar device 100a..100n and its elements can be implemented at least partially as a software which can be stored in a computer readable memory or at least partially as a firmware or at least partially as a hardware (e.g. a UWB IC) of the UWB radar device 100a...100n.

The present disclosure proposes first to determine, based on range and/or angle information obtained in a UWB ranging mode, the axis of a radar target relative to an antenna array of a UWB node (possibly including range information from other UWB nodes) and then to direct, in a UWB radar mode, a radar beam along the determined target axis, thereby using the same hardware for the beam angle determination and radar beam steering.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document. Moreover, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

It has to be noted that embodiments have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method

type claims and features of the apparatus type claims is considered as to be disclosed with this application.

Reference numerals:

| 10a...10n | antenna array |
|---|---|
| 11a...11n | antenna array |
| 12a... 12n | antenna array |
| 20 | location element |
| 30 | initialization element |
| 100a...100n | UWB radar device |
| 200a... 200n | UWB target device |
| 300 | vehicle |
| 400...410 | method steps |
| BA | beam axis |
| BS | beam steering |
| ML | main lobe |
| N1...Nn | node |
| TA | target axis |

**Claims**

1. Method of operating a UWB radar device (100a... 100n), comprising the steps:

   - determining localization information of at least one UWB target device (200a...200n) relative to the UWB radar device (100a... 100n) and, based on the determined localization information;
   - switching the UWB radar device (100a... 100n) into a radar mode, wherein an alignment of a beam of the UWB radar device (100a...100n) in the radar mode to the at least one UWB target device (200a...200n) is done by using the localization information.

2. Method according to claim 1, wherein an angle and a distance between the UWB radar device (100a... 100n) and the at least one UWB target device (200a...200n) is obtained in a ranging mode of the UWB radar device (100a...100n).

3. Method according to claim 2, wherein several UWB radar devices (100a... 100n) are performing ranging with the at least one UWB target device (200a... 200n).

4. Method according to claim 3, wherein the UWB radar device (100a...100n) directs its radar beam to a defined UWB target device (200a...200n) in the radar mode after having determined its localization information.

5. Method according to claim 3 or 4, wherein the several UWB radar devices (100a...100n) carry out the ranging mode and the radar mode sequentially.

6. Method according to claim 3 or 4, wherein the several UWB radar devices (100a... 100n) carry out the ranging mode and the radar mode in parallel.

7. Method according to any of the preceding claims, wherein the localization information is determined by measuring angle-of-arrivals.

8. Method according to any of claims 2 to 7, wherein a double sided two way ranging mode, DSTWR, is performed.

9. Method according to any of the preceding claims, wherein an out-of-band communication mode is carried out in order to determine if a UWB target device (200a...200n) intends to build up a connection to the UWB radar device (100a... 100n), wherein configuration data are exchanged in the out-of-band communication mode between the UWB radar device (100a... 100n) and the at least one UWB target device (200a...200n).

10. Method according to claim 9, wherein a time stamp is generated in the out-of-band communication mode, on which the ranging mode of the UWB radar device (100a...100n) is based.

11. UWB radar device (100a... 100n), comprising:

   - an antenna array (10a...10n);
   - a localization element (20) being functionally connected to the antenna array (10a...10n) for obtaining localization information of at least one UWB target device (200a...200n); and
   - an initialization element (30), functionally connected to the localization element (20), for switching the UWB radar device (100a... 100n) into a radar mode and, based on the determined localization information, aligning a beam of the UWB radar device (100a... 100n) to the at least one UWB target device (200a...200n).

12. UWB radar device (100a... 100n) according to claim 11, wherein the UWB radar device (100a...100n) performs a ranging mode for determining the localization information and a radar mode by using the determined localization information.

13. UWB radar device (100a...100n) according to claim 11 or 12, wherein a determining of distance and angle is carried out.

14. UWB radar device (100a... 100n) according to any of claims 11 to 13, wherein the determination of localization information is carried out on-chip or off-chip.

**15.** Computer-implemented method comprising executable instructions which, when executed by a UWB radar device (100a... 100n), cause said UWB radar device (100a... 100n) to carry out the method of any of claims 1 to 10.

Fig. 1

Fig. 3

Fig. 2

**Fig. 4**

**Fig. 5**

Fig. 6

Fig. 7

Fig. 8

Europäisches
Patentamt

European
Patent Office

Office européen
des brevets

# EUROPEAN SEARCH REPORT

Application Number

EP 22 21 2845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/186933 A1 (QUALCOMM INC [US]) 9 September 2022 (2022-09-09) * paragraphs [0002], [0003], [0157] - paragraph [0158] * | 1-15 | INV. G01S13/87 G01S13/74 |
| A | US 2022/256356 A1 (BAO JINGCHAO [US] ET AL) 11 August 2022 (2022-08-11) * paragraph [0088] - paragraph [0092]; figure 10 * | 1-15 | |
| A | US 2014/357294 A1 (RAJAKARUNANAYAKE YASANTHA [US] ET AL) 4 December 2014 (2014-12-04) * the whole document * | 1-15 | |

TECHNICAL FIELDS
SEARCHED        (IPC)

G01S

The present search report has been drawn up for all claims

| Place of search | Date of completion of the search | Examiner |
|---|---|---|
| Munich | 12 May 2023 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 2845

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | Publication date | Patent family member(s) | | Publication date |
|---|---|---|---|---|---|
| WO 2022186933 | A1 | 09-09-2022 | TW 202241188 A | | 16-10-2022 |
| | | | WO 2022186933 A1 | | 09-09-2022 |
| US 2022256356 | A1 | 11-08-2022 | US 2022256356 A1 | | 11-08-2022 |
| | | | WO 2022173483 A1 | | 18-08-2022 |
| US 2014357294 | A1 | 04-12-2014 | US 2014357294 A1 | | 04-12-2014 |
| | | | US 2016234640 A1 | | 11-08-2016 |

EPO FORM P0459

For more details about this annex : see Official Journal of the European Patent Office, No. 12/82

**EP 4 386 446 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220116088 A1
- US 20160118716 A1
- US 11265072 B2